**Europäisches Patentamt**

**European Patent Office**

**Office européen des brevets**

(11) Veröffentlichungsnummer: **0 069 109
B1**

# (12) EUROPÄISCHE PATENTSCHRIFT

(45) Veröffentlichungstag der Patentschrift:
**31.10.84**

(21) Anmeldenummer: **82890069.6**

(22) Anmeldetag: **07.05.82**

(51) Int. Cl.³: **F 16 H 37/02,** F 16 H 9/04,
G 05 G 11/00

(54) Schaltbares Wendegetriebe.

(30) Priorität: **01.07.81 AT 2923/81**

(43) Veröffentlichungstag der Anmeldung:
**05.01.83 Patentblatt 83/1**

(45) Bekanntmachung des Hinweises auf die Patenterteilung:
**31.10.84 Patentblatt 84/44**

(84) Benannte Vertragsstaaten:
**DE FR GB IT**

(56) Entgegenhaltungen:
**DE - A - 2 245 615**
**FR - A - 2 083 958**
**US - A - 3 101 821**
**US - A - 3 132 729**
**US - A - 3 987 686**

(73) Patentinhaber: **Steyr-Daimler-Puch Aktiengesellschaft,
Kärntnerring 7, A-1010 Wien (AT)**

(72) Erfinder: **Weigl, Franz, Beethovenstrasse 9, A-4300 St.
Valentin (AT)**

(74) Vertreter: **Hoschtalek, Manfred, Dr. Dipl.-Ing.,
Steyr-Daimler-Puch Aktiengesellschaft Kärntnerring 7,
A-1010 Wien (AT)**

BUNDESDRUCKEREI BERLIN

## Beschreibung

Die Erfindung betrifft ein schaltbares Wendegetriebe, das ein Umschlingungsgetriebe sowie ein Reibradgetriebe umfaßt und einer Antriebsmaschine mit einer Drehzahl- bzw. Lastverstelleinrichtung nachgeordnet ist, wobei zwei je ein Reibrad und eine Scheibe des Umschlingungsgetriebes tragende Wellen vorgesehen sind, deren Abstand zum Ein- bzw. Abschalten des einen oder anderen Getriebes mittels eines Betätigungshebels veränderbar ist.

Bei einem bekannten Wendegetriebe dieser Art (FR-A-2 083 958) ergibt sich aus einer Vergrößerung des Abstandes der beiden Wellen durch dementsprechende Spannung des die Scheiben umschlingenden endlosen Riemens od. dgl. des Umschlingungsgetriebes ein gleichsinniger Antrieb der beiden Wellen. Wird dagegen der Wellenabstand bis zum Berühren der Reibräder verkürzt, so erfolgt eine Lockerung des Riemens und damit eine Abschaltung des Umschlingungsgetriebes sowie ein Antrieb der Reibräder mit Umkehr der Drehrichtung. Zur Wellenabstandsänderung ist dabei die eine Welle in einer mittels eines Handhebels verstellbaren Schwinge gelagert. Bei einem solchen Wendegetriebe läßt das Umschlingungsgetriebe die Übertragung einer höheren Leistung zu als das Reibradgetriebe. Ist nun dieses Wendegetriebe einer Antriebsmaschine mit einer Drehzahl- oder Lastverstelleinrichtung nachgeordnet, handelt es sich also beispielsweise um ein Wendegetriebe für eine an ein Kraftfahrzeug angeschlossenen Arbeitsmaschine oder um selbstfahrende Arbeitsmaschinen, und wird bei eingeschaltetem Reibradgetriebe der Antriebsmaschine die volle Leistung abverlangt, so besteht die Gefahr einer Beschädigung des Getriebes, insbesondere aber der Reibbeläge der Reibräder bei Lastspitzen. Besonders gefährliche Verhältnisse ergeben sich, wenn die Umschaltung vom Umschlingungsgetriebe zum Reibradgetriebe bei voller Leistung der Antriebsmaschine vorgenommen wird, was wegen der bei der plötzlichen Drehrichtungsumkehr auftretenden Spitzenbelastungen zu einem Ausfall von Teilen des Reibradgetriebes führen kann.

Es ist nun eine Sperreinrichtung für den Rückwärtsgang sowie einen bestimmten Geschwindigkeitsbereich bei einem Kraftfahrzeug mit einem hydrostatischen Getriebe bekanntgeworden (US-A-3 987 686). Dieses Getriebe kann mit Hilfe eines in zwei entsprechende Stellungen bewegbaren Handhebels auf zwei Geschwindigkeitsbereiche eingestellt werden. Es besitzt außerdem ein gesondertes Ventil für die Einschaltung des Vorwärtsganges, des Leerlaufes oder des Rückwärtsganges. Wenn sich der Handhebel für die beiden Geschwindigkeitsbereiche in der Stellung für den niedrigen Geschwindigkeitsbereich befindet, kann sowohl der Vorwärts- als auch der Rückwärtsgang eingeschaltet werden. Ist jedoch der Handhebel in der Stellung für den hohen Geschwindigkeitsbereich, so ist lediglich der Vorwärtsgang oder der Leerlauf einschaltbar, da ein besonderes, mit dem Handhebel verbundenes Sperrgestänge für den Rückwärtsgang vorgesehen ist. Bei diesem hydrostatischen Getriebe geht es lediglich darum, die Wahl des hohen Geschwindigkeitsbereiches, nämlich der Getriebeübersetzungen entsprechend Fahrgeschwindigkeiten, z. B. zwischen 10 und 25 miles per hour, gleichzeitig mit dem Rückwärtsgang zu verhindern. Die Leistungsabgabe der Antriebsmaschine wird aber durch die Getriebeschaltung überhaupt nicht beeinflußt, so daß die insbesondere bei der Drehrichtungsumkehr im niedrigen Geschwindigkeitsbereich auftretenden Getriebebeanspruchungen hoch sind.

Somit liegt der Erfindung die Aufgabe zugrunde, diese Mängel zu beseitigen und ein schaltbares Wendegetriebe der eingangs geschilderten Art zu schaffen, bei dem der Antrieb über das Reibradgetriebe bei voller Leistung der Antriebsmaschine sicher verhindert ist.

Die Erfindung löst die gestellte Aufgabe dadurch, daß ein mit dem Betätigungshebel über ein Gestänge bewegungsverbundener Anschlag vorgesehen ist, der beim Verschwenken des Betätigungshebels in die dem Einschalten des Reibradgetriebes entsprechende Stellung in die Bewegungsbahn des Stellgliedes der Drehzahl- bzw. Lastverstelleinrichtung bzw. eines mit dem Stellglied gekuppelten Teiles als Wegbegrenzer vor der Höchstdrehzahl bzw. Vollast entsprechenden Stellung einrückbar ist und daß mit dem Stellglied der Drehzahl- bzw. Lastverstelleinrichtung eine Sperre gekuppelt ist, die in der der Höchstdrehzahl bzw. Vollast entsprechenden Stellung des Stellgliedes das Gestänge zwischen Anschlag und Betätigungshebel im Sinne einer Verhinderung des Einschaltens des Reibradgetriebes festhält.

Wird also der Wellenabstand verringert, um vom Antrieb über das Umschlingungsgetriebe zum Reibradantrieb überzugehen, so wird dem Stellglied der Drehzahl- bzw. Lastverstelleinrichtung mittel- oder unmittelbar ein Wegbegrenzer in die Bewegungsbahn gestellt, der das Stellglied aufhält, bevor es die der Höchstdrehzahl bzw. Vollast entsprechende Stellung erreicht. Die Antriebsmaschine kann daher nicht auf volle Leistung eingestellt werden, wenn der Reibradantrieb eingeschaltet ist. Durch die mit dem Stellglied der Drehzahl- bzw. Lastverstelleinrichtung gekuppelte Sperre, die eine Bewegung des Gestänges zwischen dem Anschlag und dem Betätigungshebel in die dem Einschalten des Reibradgetriebes entsprechende Stellung verhindert, kann die zum Einschalten des Reibradgetriebes notwendige Verringerung des Wellenabstandes nicht herbeigeführt werden, wenn mit voller Leistung gefahren wird, also wenn das Stellglied der Drehzahl- bzw. Lastverstelleinrichtung die der Höchstdrehzahl bzw. Vollast entsprechende Stellung einnimmt. Ohne Veränderung dieser Stellung kann somit das Reibradgetriebe nicht eingeschaltet werden, so daß der Reibradantrieb bei voller Leistung der Antriebsmaschine sicher verhindert ist.

In der Zeichnung ist der Erfindungsgegenstand in einem Ausführungsbeispiel dargestellt, und zwar zeigt

Fig. 1 die wesentlichen Teile eines schaltbaren Wendegetriebes, nämlich eines Riemen-Reibradgetriebes in Ansicht,

Fig. 2 in teilweise geschnittener Seitenansicht und

Fig. 3 ein Detail im größeren Maßstab im Teilschnitt.

Auf der Welle 1 einer Einspritzbrennkraftmaschine 2 sitzen ein Reibrad 3a und eine Riemenscheibe 3b, wobei Reibrad und Riemenscheibe zu einer Einheit verbunden sind. Dem Reibrad 3b ist ein Reibrad 4a zugeordnet, das wieder mit einer Riemenscheibe 4b eine Einheit bildet und auf einer Welle 5 sitzt, die auf einer Schwinge 6 gelagert ist. In der dargestellten Stellung erfolgt der Antrieb von der Antriebsmaschine 2 über die Welle 1, die Riemenscheibe 3b, den Keilriemen 7 und die Riemenscheibe 4b zur Abtriebswelle 5. Mit Hilfe des Handhebels 8, der durch eine gefederte Rasteinrichtung 9 in drei Schwenkstellungen festgehalten werden kann, läßt sich die Schwinge 6 verschwenken, so daß in der Handhebelstellung 8' keine Kraftübertragung erfolgt, weil die Keilriemen 7 gelockert sind, aber noch keine Berührung der Reibräder 3a, 4a stattfindet. Erst wenn die Handhebelstellung 8'' erreicht ist, haben die Reibräder 3a, 4a Kraftschluß, und es erfolgt der Antrieb der Antriebswelle 5 mit gegenüber dem Riemenantrieb umgekehrter Drehrichtung.

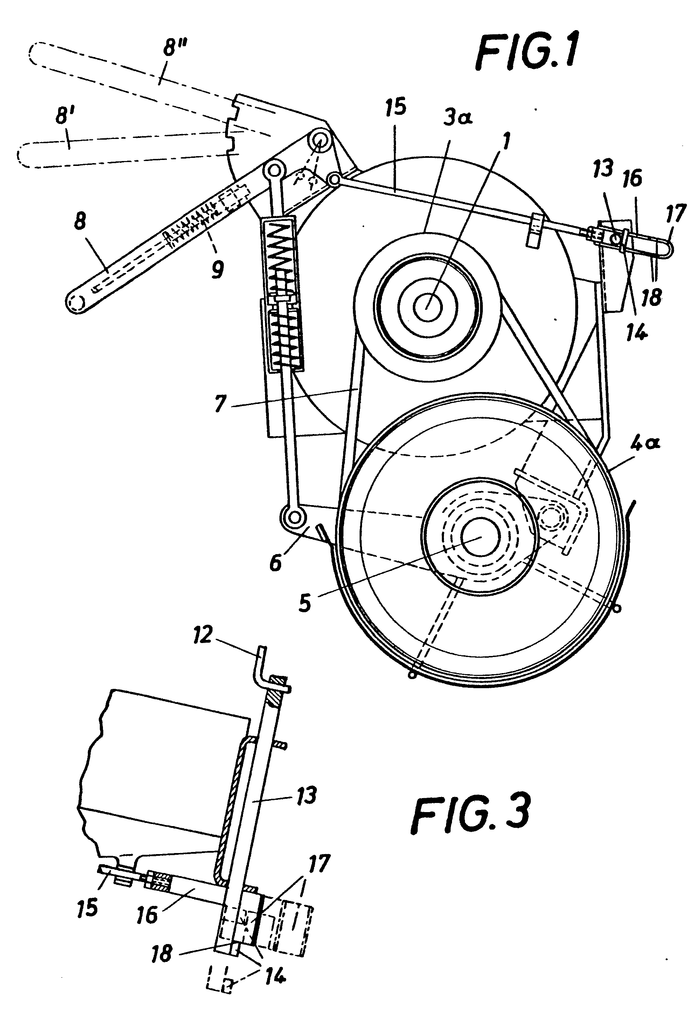

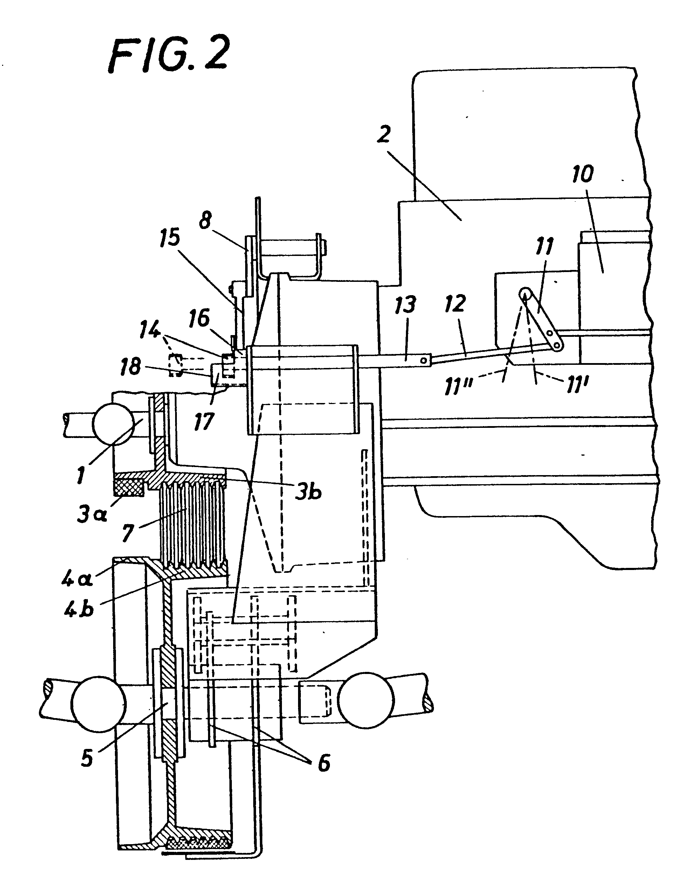

Die Einspritzbrennkraftmaschine 2 ist mit einer Einspritzpumpe 10 versehen, die ein Stellglied 11 zur Leistungsregelung aufweist. Das Stellglied 11 ist über eine Kupplungsstange 12 mit einer verschiebbar gelagerten Stange 13 verbunden, an deren Ende ein Querplättchen 14 angeschweißt ist. Am Handhebel 8 ist eine Stange 15 angelenkt, die in einem die Stange 13 umschließenden U-Bügel 16 endet, der im Bereich der U-Krümmung und darüber hinaus eine Verbreiterung 17 aufweist. In der in den Fig. 1 und 2 dargestellten Vollaststellung des Stellgliedes 11 kann der Handhebel 8 nur in die Stellung 8', in der keine Kraftübertragung erfolgt, verschwenkt werden, weil in der Handhebelstellung 8' die Verbreiterung 17 des Bügels 16 am Querplättchen 14 der Stange 13 anstößt und dadurch eine Sperre für das Verschwenken des Handhebels in die Stellung 8'' bzw. für das Einschalten des Reibradgetriebes 3a, 4a bildet. Erst wenn das Stellglied 11 die Stellung 11' für Teillast erreicht hat, kann das Reibradgetriebe durch Verschwenken des Handhebels in die Stellung 8'' eingeschaltet werden, weil dann das Querplättchen 14 gemäß Fig. 2 soweit nach links verschoben ist, daß sich die Verbreiterung 17 des Bügels 16 an ihm vorbeibewegen kann. Die Stellung 11'' ist die Nullstellung des Stellgliedes 11.

Fig. 3 zeigt die Stellung des Bügels 16, wenn das Reibradgetriebe 3b, 4b eingeschaltet ist, der Handhebel also die Stellung 8'' einnimmt. Die Verbreiterung 17 des Bügels 16 befindet sich dann im Bereich der Stange 13, so daß der Seitenrand 18 der Verbreiterung 17 als Anschlag für das Querplättchen 14 dient und das Stellglied 11 nur die Nullstellung 11'' oder die Teillaststellung 11', nicht aber die in Fig. 2 dargestellte Vollaststellung einnehmen kann.

## Patentanspruch

Schaltbares Wendegetriebe, das ein Umschlingungsgetriebe (3b, 7, 4b) sowie ein Reibradgetriebe (3a, 4a) umfaßt und einer Antriebsmaschine (2) mit einer Drehzahl- bzw. Lastverstelleinrichtung nachgeordnet ist, wobei zwei je ein Reibrad und eine Scheibe des Umschlingungsgetriebes tragende Wellen (1, 5) vorgesehen sind, deren Abstand zum Ein- bzw. Abschalten des einen oder anderen Getriebes mittels eines Betätigungshebels (8) veränderbar ist, dadurch gekennzeichnet, daß ein mit dem Betätigungshebel (8) über ein Gestänge (15) bewegungsverbundener Anschlag (18) vorgesehen ist, der beim Verschwenken des Betätigungshebels (8) in die dem Einschalten des Reibradgetriebes (3a, 4a) entsprechende Stellung (8'') in die Bewegungsbahn des Stellgliedes (11) der Drehzahl- bzw. Lastverstelleinrichtung bzw. eines mit dem Stellglied gekuppelten Teiles (14) als Wegbegrenzer vor der der Höchstdrehzahl bzw. Vollast entsprechenden Stellung einrückbar ist, und daß mit dem Stellglied (11) der Drehzahl- bzw. Lastverstelleinrichtung eine Sperre (14, 17) gekuppelt ist, die in der der Höchstdrehzahl bzw. Vollast entsprechenden Stellung des Stellgliedes (11) das Gestänge (15) zwischen Anschlag und Betätigungshebel (8) im Sinne einer Verhinderung des Einschaltens des Reibradgetriebes (3a, 4a) festhält.

## Claim

An engageable reversing gear, which comprises a belt transmission (3b, 7, 4b) and a friction gear (3a, 4a) and is arranged downstream of a drive engine (2) with a speed- or load-varying device, two shafts (1, 5) being provided, each of which supports one friction wheel and one pulley of the belt transmission and the distance of which may be varied by means of an actuating lever (8) in order to engage or disengage one or the other gear, characterized in that a stop (18) is provided which moves jointly with the actuating lever (8) by way of a rod (15) and which, when the actuating lever (8) is swung into the position (8'') corresponding to the engagement of the friction gear (3a, 4a), may be shifted into the path of movement of the control member (11) of the speed- or load-varying device or of a part (14) coupled to the control member (11) to act as a path limiting device in front of the position corresponding to the maximum speed or full load, and there is connected to the control member (11) of the speed- or load-varying device a locking means (14, 17) which in the position of the setting member (11) corresponding to the maximum speed or full load holds the rod (15) rigid between the stop and the actuating lever (8) so as to prevent the friction gear (3a, 4a) from engaging.

## Revendication

Transmission réversible qui comprend une transmission à courroies (3b, 7, 4b) ainsi qu'une transmission à friction (3a, 4a) et qui est montée à la suite d'un moteur d'entraînement (2) à organe de réglage de la vitesse ou de la charge, dans laquelle il est prévu deux arbres (1, 5) portant chacun une roue à friction et une poulie de la transmission à courroies, dont la distance peut être modifiée au moyen d'un levier de manoeuvre (8) pour la mise en service ou la mise au repos de l'une ou l'autre transmission, caractérisée en ce qu'il est prévu une butée (18) liée au déplacement du levier de manoeuvre (8) par l'intermédiaire d'une tringle (15) qui, par suite du pivotement dudit levier de manoeuvre (8) à sa position qui correspond à la mise en service de la transmission à friction (3a, 4a), vient se placer sur le chemin de déplacement de l'organe de réglage (11) du dispositif de réglage de la vitesse ou de la charge ou d'une pièce réunie à cet organe de réglage, comme limiteur de déplacement avant la position correspondante à la vitesse maximum de rotation ou à la pleine charge, cependant qu'un moyen de blocage (14, 17) est couplé à l'organe de réglage (11) du dispositif de réglage de la vitesse ou de la charge et immobilise la tringle (15) entre une butée et le levier de manoeuvre (8) dans le sens de l'interdiction de la mise en service de l'accouplement de la transmission à friction (3a, 4a) lorsque l'organe de réglage (11) est à sa position qui correspond à la vitesse maximum de rotation ou à la pleine charge.

# FIG.1

# FIG.3

# FIG.2